# EUROPÄISCHE PATENTANMELDUNG

(11) **EP 1 855 062 A1**
(43) Veröffentlichungstag der Anmeldung: **14.11.2007**
(21) Anmeldenummer: 07008606.1
(22) Anmeldetag: 27.04.2007
(51) Int. Cl.: F24D 3/14

(54) **Halteklammer für Rohre**

(30) Priorität: 10.05.2006 IT BZ20060019
(71) Anmelder: EUROTHERM S.P.A., 39010 Appiano (Bolzano) (IT)
(72) Erfinder: Pezzei, Cleto, 39057 Appiano BZ (IT)
(74) Vertreter: Oberosler, Ludwig

(57) **Zusammenfassung**

Halteklammer (2) für die Halterung von Rohren bestehend aus einem geradlinigen oder verkehrt U-förmigen Abschnitt (2a) welcher an beiden Enden Verankerungselemente aufweist welche geeignet sind, durch Eindringen in den aufgeschäumten Werkstoff von Isolierpaneelen (1) die Halterung von Rohren (3) zu erreichen, wobei die Verankerungsenden aus kegelförmigen oder pyramidenförmigen Elementen(2d, 2x) bestehen welche an der Grundfläche ein zylinderförmiges oder polyedrisches koaxiales Element (2c) aufweisen welches kleineren Querschnitt als die Grundfläche der kegelförmigen oder pyramidenförmigen Elemente (2d, 2x) aufweisen und wobei zwischen diesem zylindrischen oder polyedrischen Element (2c) und dem geradlinigen oder dem umgekehrt U-förmigen Abschnitt (2a) ein Auflage- und Eindringbegrenzungselement (2b) vorgesehen ist.

## Beschreibung

Die Erfindung bezieht sich auf eine Halteklammer für Rohre welche aus elastischem oder steifem Kunststoff, z.B. im Spritzgussverfahren, hergestellt wird, welche im Falle elastischen Werkstoffs eine geradlinige lang gezogene Form aufweist und im Falle steifen Werkstoffs eine umgekehrte U-Form aufweist und welche an glatten oder mit Vorsprüngen, z.B. zur Halterung der nachträglich im Unterbeton eingegossenen biegsamen Rohre eines Fußbodenheizungssystems, versehenen Isolierpaneelen anbringbar ist, ohne die Halterung von Rohren allgemein an Paneelen oder Trägerelementen aus Schaumstoff auszuschließen. Die besagten Isolierpaneele, bzw. die Trägerelemente, aus Schaumstoff können mit einer, in den Schaumstoff eingebetteten, Netzstruktur versehen sein welche vorteilhafterweise von den Eindringenden der Klammern durchdrungen wird.

Es sind Halteklammern der oben erwähnten Art bekannt welche mit spitzen Enden versehen sind welche das Eindringen dieser in, auf der Bodenplatte verlegten, Isolierplatten aus Kunstschaum ermöglichen wobei die Verankerungsposition durch mindestens einem widerhakenartigem Element gesichert wird. Bei einer Belastung der Halteklammer welche das Herausziehen der Verankerungsenden aus dem Isolierpaneel verursachen würde, hat das besagte widerhakenartige Element, wegen seiner zur Längsachse des Verankerungsendes schrägen Position und/oder wegen der elastischen Kraft welche während der Eindringphase geladen wird, die Tendenz sich mit dem freien Ende welches zur Eindringfläche gerichtet ist von der Achse des Eindringendes abzuspreizen wodurch die Rückhaltefläche im Innern des Isolierpaneels vergrößert wird um den Widerstand gegen ein Herausreißen unter Verformung und Beschädigung des Isolierpaneels im Bereich um das Eindringende zu verhindern.

Diese elastische Widerhakenelemente haben den Nachteil, dass sie die Wirkung gegen das Herausziehen erst infolge teilweisen Herausziehens der Verankerungsenden mit Erreichen der Abspreizung der elastischen Widerhakenelemente, entwickeln. Dies bringt mit sich, dass infolge einer relativ niedrigen Belastung ein teilweises Herausziehen der Halteklammer erfolgt und erst infolge dieses teilweisen Nachgebens die elastischen Widerhakenelemente in Funktion treten. Das besagte Nachgeben mehrerer Halteklammern bewirkt, z.B. im Falle von Fußbodenheizungen, dass das Rohr nicht in der vorbestimmten Position festgehalten wird und somit wird nicht die Mindestdeckschicht des, das Rohr abdeckenden, Bodenbetons garantiert.

Die bekannten Halteklammern können mittels einer bekannten mechanischen Klammermaschine (tacker) oder händisch angebracht werden; im Falle von, mit Vorsprüngen versehenen, zwecks Festlegung der Position der Rohre, ausgestatteten Isolierpaneelen, werden meistens händisch anbringbare Halteklammern verwendet weil die relativ engen Zwischenräume zwischen den Vorsprüngen nicht den Zugang mit der Klammermaschine ermöglichen. Alle bekannten Halteklammern sind weiters als Einzelelemente ausgeformt, und zwar mit zwei Verankerungsenden welche über ein biegsames oder steifes Verbindungelement verbunden sind.

Die Erfindung stellt sich die Aufgabe eine Halteklammer für Rohre der oben beschriebenen Art zu schaffen, welche mühelos händisch oder mittels Klammermaschine angebracht werden kann, welche bereits bei maximaler Eindringtiefe oder in Verankerungsstellung eine beträchtliche Wirkung gegen das Herausziehen entwickelt und welche auch auf einfache Weise als Mehrfachklammer herstellbar ist indem diese aus einer Reihe von Verankerungsenden besteht welche unter sich über ein biegsames Verbindungselement verbunden sind und, bei Bedarf, von einer Mehrfachklammer abreißbar oder abschneidbar sind um eine einfache Halteklammer oder eine Mehrfachhalteklammer mit einer gewünschten Anzahl von Verankerungseinheiten zu erhalten.

Zur Lösung dieser Aufgabe schlägt die Erfindung eine Halteklammer für Rohre vor welche an den Verankerungsenden die Form eines umgekehrten Kegels oder einer umgekehrten Pyramide haben an welche ein zylindrischer oder polyedrischer koaxialer Verdichtungsansatz anschließt auf welchen ein Auflage- oder Eindringbegrenzungselement folgt welches gleichzeitig für die Aufnahme der händischen oder von der Klammermaschine erzeugten Eindringkraft dient. Die Erfindung schließt nicht aus, dass der besagte kegelförmige oder pyramidenförmige Endbereich mit einem oder mit mehreren elastischen Widerhakenelementen ausgestattet ist welche während des Eindringens der Verankerungsenden in die Isolierplatte in entsprechende Ausnehmungen an den kegelförmigen oder pyramidenförmigen Enden entweichen können.

Der Verbindungsabschnitt zwischen den beiden Verankerungsenden der Halteklammer kann erfindungsgemäß verschiedene Form und unterschiedlichen Querschnitt aufweisen, er kann sich geradlinig erstrecken und bei der Anbringung der Klammer U-förmig gebogen werden, oder er kann bereits in Form eines umgekehrten U vorgeformt sein wobei der Bogen den Außendurchmessers des zu befestigenden Rohres entspricht, in diesem letzten Fall ist die Klammer aus steifem Werkstoff geformt.

Das kegelförmige oder pyramidenförmige Verankerungsende dringt erfindungsgemäß leicht, ohne Abweichung von der Ausrichtung der Eindringkraft, in die aufgeschäumte Masse des Isolierpaneels ein. Das Ausziehen hingegen wird bereits in der Verankerungsposition, bei maximaler Eindringtiefe, verhindert sobald, infolge eines leichten Herausziehens, durch die Auflage der relativ ausgedehnten ringförmigen Grundfläche des Kegels oder der Pyramide am perforierten aufgeschäumten Material welches sich jedoch elastisch an den zylindrischen oder polyedrischen Ansatz welcher von der Grundfläche des Kegels oder der Pyramide absteht anschmiegt, wobei eine Verdichtung im Bereich des sich anschmiegenden Materials stattfindet und so der Widerstand gegen ein Herausziehen erhöht wird.

Die Eindringtiefe ist durch Auflageelemente oder Eindringbegrenzungselemente begrenzt welche zwischen dem koaxial von der Grundfläche des kegelförmigen oder der pyramidenförmigen Verankerungsendes abstehenden zylindrischen oder polyedrischen Ansatzes und dem geradlinigen oder umgekehrt U-förmigen Verbindungsteil der Halteklammer angeordnet sind.
Vorteilhafterweise ist das Auflageelement oder das Eindringbegrenzungselement in Befestigungsposition des Rohres so angeordnet, dass es nach außen absteht um nicht das Anbringen der Klammer am Rohr zu behindern; das besagte Element kann, für die händische Anbringung oder für die Anbringung mittels Klammermaschine oder auch für beide Anbringungsarten, geeignete Form und Größe aufweisen. Die Erfindung schließt nicht aus, dass das Eindringbegrenzungselement nicht für die Aufnahme der Eindringkraft bestimmt sind, indem diese vom mittleren steifen U-förmigen Abschnitt aufgenommen wird; in diesem Fall können die Eindringbegrenzungselemente kleinere Ausmaße aufweisen oder vollständig fehlen um nicht die Eindringtiefe zu begrenzen. Die Praxis hat gezeigt, dass es mit den erfindungsgemäßen kegelförmigen oder pyramidenförmigen Verankerungsenden möglich ist eine Verankerung an Paneelen zu erreichen welche geringere Stärke aufweisen als jene welche für eine effiziente Verankerung mittels traditioneller Verankerungsenden erforderlich wäre, dies weil die erfindungsgemäßen Eindringelemente, bei geringerer Eindringtiefe, eine widerstandsfähigere Verankerung ermöglichen.

Die Erfindung wird anschließend anhand zweier vorzuziehender, in den beigelegten Zeichnungen schematisch dargestellter, Ausführungsbeispiele unterschiedlicher erfindungsgemäßer Halteklammern für Rohre näher erklärt, dabei erfüllen die Zeichnungen rein erklärenden, nicht begrenzenden Zweck.

Die Fig. 1 zeigt in perspektivischer Darstellung ein Rohrstück welches an ein Isolierpaneelstück ohne Vorsprünge mittels erfindungsgemäßer Halteklammer befestigt ist, weiters ist die Klammer vor deren Biegung in eine umgekehrte U-Form dargestellt.

Die Fig. 2 zeigt einen Querschnitt durch ein, mittels erfindungsgemäßer Halteklammer an einem Paneel befestigtes, Rohr wobei die Schnittebene durch die Achsen der Verankerungsenden der nicht geschnittenen Halteklammer in Befestigungsposition verläuft.

Die Fig. 2a zeigt einen Querschnitt durch ein, mittels erfindungsgemäßer Halteklammer an einem Paneel befestigtes, Rohr wobei die Halteklammer aus steifem Werkstoff hergestellt ist und eine umgekehrte U-Form aufweist und die Eindringbegrenzungselemente kleinere Ausmaße aufweisen.

Die Fig. 3 zeigt ein kegelförmiges Verankerungsende einer erfindungsgemäßen Halteklammer welches mit elastischen widerhakenartigen Elementen versehen ist wobei diese einen Teil der Längserstreckung des Kegels einnehmen und im Verankerungskegel eingelassen sind.

Die Fig. 4 zeigt ein kegelförmiges Verankerungsende auf welche eine Ausziehkraft wirkt welche eine teilweise Verdichtung und Verdrängung des an der Grundfläche des Kegels aufliegenden aufgeschäumten Werkstoffs bewirkt, wobei die widerhakenförmigen Elemente welche die gesamte Längserstreckung des Kegels einnehmen eine elastisch gespreizte Position einnehmen welche einen zusätzlichen Widerstand gegen das Herausziehen bewirkt.

Die Fig. 5 zeigt in Seitenansicht eine Mehrfachhalteklammer welche ein Rohr an einem Isolierpaneel festhält, die Mehrfachhalteklammer besteht aus fünf Verankerungsenden welche untereinander durch flexible schnurförmige Elemente verbunden sind.

Die Fig. 6 zeigt einen Abschnitt bestehend aus einer Reihe von Verankerungsenden welche hintereinander durch flexible schnurartige Elemente verbunden sind deren Enden von den Eindringbegrenzungselementen der Verankerungsenden abzweigen.

Die Fig. 7 zeigt einen Abschnitt bestehend aus einer Reihe von Verankerungsenden welche hintereinander durch flexible schnurartige Elemente verbunden sind, wobei die Enden dieser sich von einem einzigen schnurartigen Teil verzweigen welcher von jedem Eindringbegrenzungselement des Verankerungsendes absteht.

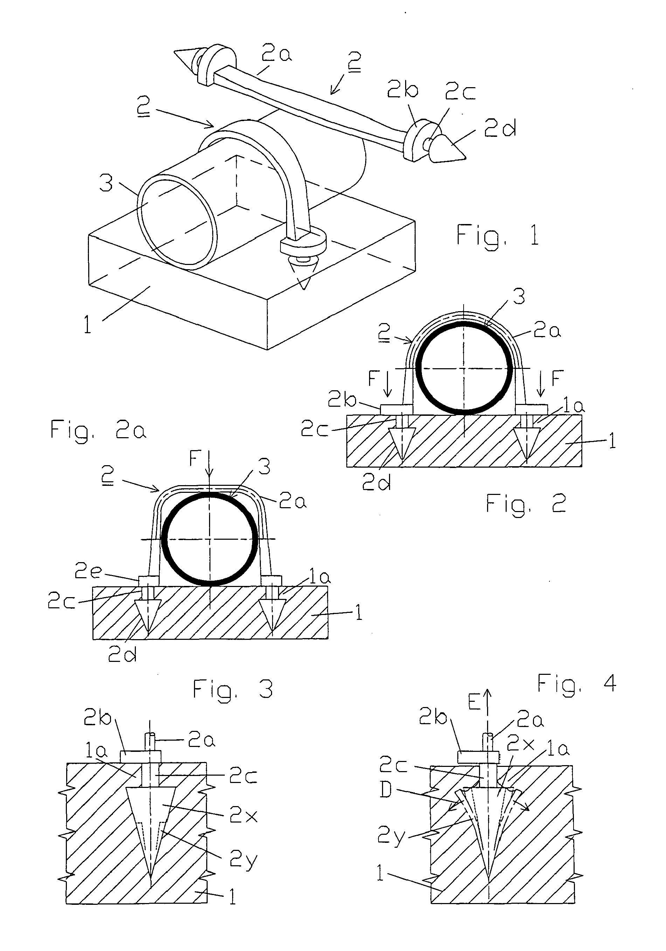

Am glatten oder mit Vorsprüngen versehenen Isolierpaneel 1, welches mit einer eingebetteten Netzstruktur als Armierung versehen sein kann, wird das Rohr 3 verlegt welches anschließend im Beton der Bodenplatte eingebettet wird; die Position des am Isolierpaneel 1 aufliegenden Rohres wird durch Anbringen der Halteklammern 2 gesichert. Diese Halteklammern bestehen wesentlich aus einem geradlinigen oder umgekehrt U-förmigen Teil 2a und aus zwei kegelförmigen oder pyramidenförmigen Verankerungsenden 2d welche an den Enden des Teiles 2a vorgesehen sind. Die Verankerungsenden 2d sind mit einem zylindrischen oder polyedrischen Element 2c versehen welches koaxial von der Grundfläche des Kegels oder der Pyramide absteht und zum Teil 2a hin ein Auflage- oder Eindringbegrenzungselement 2b aufweist. Die Verankerungselemente 2d der Halteklammer 2 dringen in das Isolierpaneel 1 ein indem auf die besagten, von der verkehrten U-förmig am Rohr 3 angebrachten Klammer, nach außen abstehenden Auflageelemente 2b Druck ausgeübt wird. Das Eindringen des Kegels oder der Pyramide 2d in die aufgeschäumte Masse des Paneels 1, welches durch Anwendung einer Kraft F auf die Elemente 2b erfolgt, bewirkt die Durchbohrung der Masse mit progressiver elastischer Verdichtung der selben längs der Erstreckung des Kegels bis Erreichung der maximalen Verdichtung im Bereich der Grundfläche des Kegels wobei, jenseits dieser Position, eine elastische Rückformung des Werkstoffes 1 a des Paneels 1 bis zur Anschmiegung außen an die Oberfläche des zylindrischen oder polyedrischen Teiles 2c, stattfindet. Die elastische Rückformung des vorher während des Eindringens des Kegels 2d verdichteten Werkstoffes 1a, bildet eine Auflage für die Grundfläche des Kegels 2d oder der Pyramide welche geeignet ist einem Ausziehen E entgegenzuwirken. Die Rückhaltewirkung des Verankerungsendes 2d wird dadurch erhöht, dass durch den zylindrischen oder polyedrischen Teil 2c die vollständige elastische Rückformung des Werkstoffes 1a verhindert wird wobei eine wirkungsvolle Auflage und ein Bereich mit teilweise verdichtetem Werkstoff definiert werden welcher geeignet ist das Herausreißen des Werkstoffes im Verankerungsbereich zu verhindern und somit einen beachtenswerten Widerstand gegen das Ausreißen E des Verankerungsendes 2d zu bieten. Die Auflageelemente 2b können erfindungsgemäß unterschiedliche Formen aufweisen welche geeignet sind um an diesen, zwecks Anbringung der Halteklammer, mittels Klammermaschine oder/und händisch zu wirken; diese Elemente bestimmen zusätzlich die Eindringtiefe der Verankerungsenden und vermitteln, durch Anliegen an der Oberfläche des Paneels 1, der Halteposition der Klammer 2 mehr Stabilität.
Die nach außen abstehenden Auflageelemente 2b welche für die Aufnahme der Eindringkraft F dienen können, im Falle von U-förmig gestalteten Halteklammern, aus steifem Werkstoff (Fig. 2a), kleinere Ausmaße aufweisen nachdem die Eindringkraft F vom mittleren Bereich des U-förmigen Abschnittes aufgenommen wird, es wird nicht ausgeschlossen dass die Halteklammern aus steifem Werkstoff auch keine Auflageelemente oder Eindrinbegrenzungselemente aufweisen.

Erfindungsgemäß kann das kegelförmige oder pyramidenförmige Verankerungsende 2x mit mindestens einem widerhakenartigen Element 2y versehen sein welches, während des Eindringens in den Schamstoff, elastisch in eine entsprechende Ausnehmung am Kegel oder an der Pyramide entweicht und die Tendenz hat, bei erreichter Eindringtiefe und/oder bei Anwendung einer Belastung E zum Herausziehen der Verankerungsenden 2x, aus dem Paneel 1 sich elastisch abzuspreizen D. Die elastischen widerhakenförmigen Elemente 2y können einen Teil oder die gesamte Längserstreckung des kegelförmigen oder pyramidenförmigen Verankerungsendes 2x einnehmen.

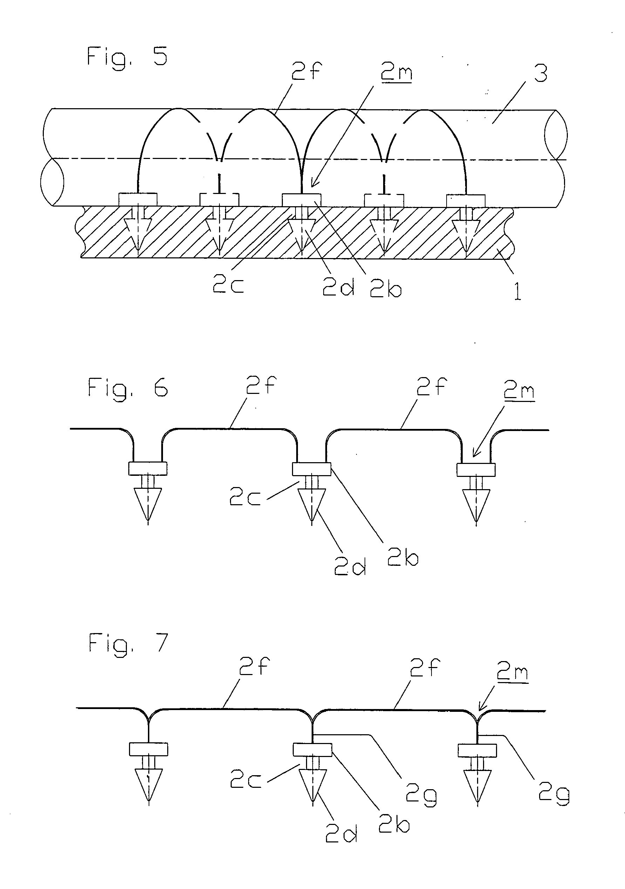

Erfindungsgemäß kann jedes oben beschriebene Verankerungsende 2d, 2x über ein flexibles schnur- oder bandartiges Element 2f mit identischen Verankerungsenden verbunden werden, wobei die Enden der besagten Elemente 2f von den entsprechenden Eindringbegrenzungselementen 2b oder vom zylindrischen oder polyedrischen Element 2c ohne Eindringbegrenzungselement 2b abzweigen, bzw. von einem einzigen schnur- oder bandförmigen Element 2g welches vom Eindringbegrenzungselement 2g oder vom Element 2c absteht abzweigen. Die besagte Reihe von Verankerungsenden 2d, 2x welche über schnur- oder bandförmige Elemente verbunden sind ermöglichen das Abtrennen, z.B. durch Durchschneiden eines der schnur- oder bandförmigen Elemente 2f, um eine einfache Halteklammer 2 (Fig. 1) mit zwei Verankerungsenden oder eine Mehrfachhalteklammer 2m (Fig. 5), z.B. mit fünf Verankerungsenden zu erhalten.

## Patentansprüche

1. Halteklammer (2) für die Halterung von Rohren bestehend aus einem geradlinigen oder verkehrt U-förmigen Teil (2a) welcher an beiden Enden Verankerungsenden aufweist welche, durch Eindringen in den aufgeschäumten Werkstoff von Isolierpaneelen (1), geeignet sind die Halterung von Rohren (3) zu erreichen, **dadurch gekennzeichnet, dass** die Verankerungsenden aus kegelförmigen oder pyramidenförmigen Elementen (2d, 2x) bestehen welche an der Grundfläche ein zylinderförmiges oder polyedrisches koaxiales Element (2c) aufweisen welches kleineren Querschnitt als jenen der Grundfläche der kegelförmigen oder pyramidenförmigen Elemente (2d, 2x) aufweisen und dass, zwischen diesem zylindrischen oder polyedrischen Element (2c) und dem geradlinigen oder dem umgekehrt U-förmigen Teil (2a), ein Auflage- und Eindringbegrenzungselement (2b) vorgesehen ist.

2. Halteklammer gemäß Anspruch 1, **dadurch gekennzeichnet, dass** das kegelförmige oder pyramidenförmige Verankerungsende (2x) mit elastischen widerhakenförmigen Elementen (2y) ausgestattet ist wobei diese während der Eindringphase mindestens teilweise in entsprechende Ausnehmungen am kegelförmigen oder pyramidenförmigen Element entweichen.

3. Halteklammer gemäß die Ansprüche 1 und 2, **dadurch gekennzeichnet, dass** das elastische widerhakenförmige Element oder die elastischen widerhakenförmigen Elemente (2y) einen Teil oder die gesamte Längserstreckung des kegelförmigen oder pyramidenförmigen Elementes (2x) einnehmen.

4. Halteklammer gemäß Anspruch 1, **dadurch gekennzeichnet, dass** das Auflage- und Eindringbegrenzungselement (2b) in Halterungsposition, an der verkehrt U-förmigen Halteklammer, nach außen absteht und eine Form aufweist welche die Anbringung und die Halterung der Klammer mittels Klammermaschine und/oder händisch ermöglicht, wobei einerseits eine Fläche für die Wirkung der Eindringkraft (F) geboten wird und an der gegenüberliegenden, der Oberfläche des Isolierpaneels zugekehrten, Seite eine FläcÜ idinxStabilisierung d er Halterungsposition der Klammer (2) geeignet ist.

5. Halteklammer gemäß Anspruch 1, **dadurch gekennzeichnet, dass** das Auflage- und Eindringbegrenzungselement (2e), im Falle steifer umgekehrt U-förmiger Halteklammern (2), kleinere Ausmaße hat und dass in diesem Fall die Eindringkraft (F) am mittleren Teil des umgekehrt U-förmigen Abschnittes ausgeübt wird.

6. Halteklammer gemäß den Ansprüchen 1 und 5, **dadurch gekennzeichnet dass**, im Falle steifer umgekehrt U-förmiger Halteklammern (2), diese frei von Auflage- und Eindringbegrenzungselement (2e) sind.

7. Halteklammer gemäß Anspruch 1, **dadurch gekennzeichnet, dass** die Halteklammer (2m) aus mindestens drei Verankerungsenden (2d, 2x) gebildet wird welche hintereinander unter sich mittels flexibler schnur- oder bandartiger Elemente (2f) verbunden sind wobei diese von den entsprechenden Eindringbegrenzungselementen (2b) oder direkt von den zylindrischen oder polyedrischen Elementen (2c), ohne Eindringbegrenzungselemente (2b) abzweigen oder dass sie von einem einzigen schnur- oder bandartigen Abschnitt (2g) welcher vom Eindringbegrenzungselement (2b) oder direkt vom zylindrischen oder polyedrischen Element (2c) abzweigen.

8. Halteklammer gemäß die Ansprüche 1 und 7, **dadurch gekennzeichnet, dass** eine Reihe von Verankerungsenden (2d, 2x) hergestellt werden welche nacheinander durch flexible schnur- oder bandförmige Elemente (2f) verbunden sind und dass von der besagten Reihe, nach Wahl, durch Durchtrennen des flexiblen Elementes (2f), einzelne Halteklammern (2) mit zwei Verankerungselementen oder Mehrfachhalteklammern (2m) mit mehreren Verankerungselementen, herstellbar sind.
